# EUROPÄISCHE PATENTSCHRIFT

(11) **EP 3 584 059 B1**
(45) Veröffentlichungstag und Bekanntmachung des Hinweises auf die Patenterteilung: **16.10.2024**
(21) Anmeldenummer: 19173974.7
(22) Anmeldetag: 13.05.2019
(51) Int. Cl.: B29C 48/025, B29C 48/156, B29C 48/28, B29C 48/34, B29C 48/88, B29C 48/345, B29C 48/07, B29K 7/00, B29C 48/30, B29C 48/285

(54) **ANLAGE ZUR HERSTELLUNG VON BANDARTIGEN MATERIALSTREIFEN**
ASSEMBLY FOR PRODUCING SHEET-LIKE MATERIAL STRIPS
INSTALLATION DE FABRICATION DE FEUILLES DE MATIÈRE SOUS FORME DE BANDES

(30) Priorität: 20.06.2018 DE 102018209936
(43) Veröffentlichungstag der Anmeldung: 25.12.2019
(73) Patentinhaber: Continental Reifen Deutschland GmbH, 30175 Hannover (DE)
(72) Erfinder: Wolf, Hilke, 30165 Hannover (DE); Habrman, Zdenek, 30165 Hannover (DE); Rennmann, Tim, 30165 Hannover (DE); Schroeder, Carola, 30165 Hannover (DE)
(74) Vertreter: Continental Corporation

(56) Entgegenhaltungen:
- EP-A1- 1 691 970
- EP-B1- 1 691 970
- WO-A1-2004/056558
- DE-A1- 102006 039 980
- DE-A1- 102014 209 713
- JP-A- 2000 136 488

## Beschreibung

### Anlage zur Herstellung von bandartigen Materialstreifen

Die Erfindung betrifft eine Anlage zur Herstellung einer Anzahl von bandartigen Materialstreifen aus in eine Kautschukmischung eingebetteten parallel zueinander und in Längsrichtung der Materialstreifen verlaufenden textilen Festigkeitsträgern, mit
- einem Spulengatter mit einer Vielzahl von Spulen mit aufgewickelten textilen Festigkeitsträgern,
- einem Extruder zum Plastifizieren einer Kautschukmischung,
- einem Spritzkopf zum gruppenweisen Vorordnen und Einbetten der Festigkeitsträger in die Kautschukmischung, wobei der Spritzkopf einen modularen Aufbau zur Herstellung von zumindest zwei unterschiedlichen Typen von in jedem Typ untereinander gleichen Materialstreifen aufweist,
- einer dem Spritzkopf nachgeordneten Kühlvorrichtung mit je einer Kühlstrecke für die jeweils untereinander gleichen Materialstreifen, wobei jede Kühlstrecke angetriebene Rollen und frei drehbar gelagerten Kühlrollen umfasst und
- einer Aufwickelstation zum Aufwickeln der gekühlten Materialstreifen.

Eine derartige Anlage, welche eine Anlage zur simultanen Herstellung zweier Materialstreifen für Gürtellagen ist, ist beispielsweise aus der WO 2004/056558 A1 bekannt. Gemäß einem Ausführungsbeispiel umfasst die Anlage einen Extruder, zwei Schneideinrichtungen, mehrere Transporteinrichtungen sowie eine Kühlvorrichtung mit einer mit Rollen versehenen Kühlstrecke, wobei die Kühlvorrichtung insbesondere in Form eines Kühlturms ausgeführt ist. Eine solche Anlage soll eine schnelle Fertigung der beiden Materialstreifen für zwei Gürtellagen ermöglichen.

Die DE 10 2006 039 980 A1 offenbart ein Verfahren zum Herstellen von mit unterschiedlichen Festigkeitsträgern versehenen Reifenaufbauteilen. Bei diesem Verfahren werden von einer ersten Spule stammende Festigkeitsträger einem ersten Spritzkopf und von einer zweiten Spule stammende Festigkeitsträger einem zweiten Spritzkopf zugeleitet. Durch Gummierung der Festigkeitsträger werden Materialstreifen gebildet, welche zur weiteren Verarbeitung weitergeleitet sowie zuvor insbesondere durch eine Kühlschleife oder Speicherschleife transportiert werden. Das Verfahren soll eine flexible Herstellung verschiedener Reifenbauteile auf einer einzigen Anlage ermöglichen.

Die JP 2000 136 488 A offenbart eine Anlage zur Herstellung von bandartigen Materialstreifen aus in eine Kautschukmischung eingebetteten Korden. Die Anlage umfasst zwei Spulengatter mit Spulen, wobei sich auf den Spulen des einen Spulengatters Korde eines ersten Typs und auf den Spulen des zweiten Spulengatters Korde eines zweiten Typs befinden. Aus den Spulengattern können die Korde zu zwei Spritzköpfen geleitet werden, an welchen ein Extruder positionierbar ist. Mittels des Extruders gefertigte bandartige Materialstreifen passieren eine dem Extruder nachgeordnete Kühlvorrichtung mit mehreren Rollen, wobei die Materialstreifen zunächst zwei Kühlrollen und anschließend zwei angetriebene Rollen passieren.

Die EP 1 691 970 A1 offenbart ein Verfahren zur Herstellung eines bandartigen Materialstreifens aus in eine Kautschukmischung eingebetteten Festigkeitsträgern. Die Materialstreifen werden auf Spulen aufgespult und anschließend zu einer Schneideinrichtung transportiert, an welcher sie abgespult und zugeschnitten werden.

Aus der DE 10 2014 209 713 A1 ist ein Verfahren zur Herstellung einer für eine Karkasseinlage oder für eine Gürtellage vorgesehenen Materialbahn bekannt. Bei diesem werden parallel zueinander ausgerichtete Festigkeitsträger vor einem Doppelextruder mit einem einen Oberteil und einen Unterteil aufweisenden Spritzkopf positioniert. Dem Doppelextruder werden eine erste und eine von dieser verschiedene zweite Kautschukmischung zugeführt. Die Festigkeitsträger werden durch den Spritzkopf geführt, wobei die Festigkeitsträgerlage auf ihrer Oberseite über den Oberteil des Spritzkopfes mit der ersten Kautschukmischung und über den Unterteil des Spritzkopfes auf ihrer Unterseite mit der zweiten Kautschukmischung beschichtet wird. Das Verfahren weist eine hohe Prozessgeschwindigkeit auf und ermöglicht eine hohe Fertigungsgenauigkeit.

Aus der EP 3 269 562 A1 ist ein weiteres Verfahren zur Herstellung eines bandartigen Materialstreifens bekannt. Dabei werden als textile Festigkeitsträger Korde aus Polyamid 6.6 verwendet, welche bei einer Dehnung von 4 % einen höheren E-Modul als vergleichbare Korde aufweisen und somit ermüdungsbeständiger sind in Bezug auf Zug-, Druck- und Biegewechselbeanspruchungen sind. Es ist bekannt, Verfahren der eingangs genannten Art auf Anlagen auszuführen, welche in der Fachwelt unter der Bezeichnung Cap Strip Line oder Cap Strip System bekannt sein. Die Firma KraussMaffei Berstorff GmbH bietet unter der Bezeichnung Cap Strip Line eine Anlage zur Fertigung von Spulbandagen für Hochgeschwindigkeitstreifen mit Nylon- oder Hybridfäden an, welche die Herstellung von sechzehn Materialstreifen mit jeweils neun Fäden in einem Arbeitsgang gestattet. Diese Anlage weist ein Spulengatter mit 144 Spulen zur Aufnahme von Nylon- oder Hybridfäden und einen Stiftextruder zum Plastifizieren einer Kautschukmischung auf, welcher eine Zahnradpumpe befüllt, die für eine konstante Ausstoßleistung und den erforderlichen Druckaufbau sorgt. Die Anlage weist ferner einen hydraulisch verriegelbaren Querspritzkopf zur gleichzeitigen Beschichtung von sechzehn Streifen mit jeweils neun Fäden auf. Weitere Anlagenbestandteile sind eine Kühleinrichtung und ein Aufwickelsystem mit entsprechend der Anzahl der hergestellten Materialstreifen sechzehn Stationen. Sämtliche hergestellten Materialstreifen haben den gleichen Aufbau und enthalten die gleiche Anzahl an gleichen textilen Festigkeitsträgern, beispielsweise Polyamid 6.6.

Der Erfindung liegt die Aufgabe zugrunde, eine Anlage der eingangs genannten Art weiterzuentwickeln und hinsichtlich der Nutzungsmöglichkeiten der hergestellten Materialstreifen, beispielsweise wenn diese für die Gürtelbandage von Fahrzeugluftreifen verwendet werden, zu verbessern bzw. variabler zu gestalten.

Gelöst wird die gestellte Aufgabe erfindungsgemäß dadurch, dass jede Kühlstrecke je eine gekühlte oder ungekühlte angetriebene Rolle als erste und als letzte Rolle aufweist, wobei die Rotationsgeschwindigkeit der angetriebenen Rollen variabel einstellbar ist.

Die Erfindung gestattet es daher, mit einer Anlage zumindest zwei voneinander unterschiedliche Materialstreifen, diese jeweils in einer gewissen Anzahl, gleichzeitig herzustellen. Es ist daher möglich, gleichzeitig unterschiedlich aufgebaute Materialstreifen zu verarbeiten, insbesondere mit dem Vorteil kleinerer Losgrößen, da beispielsweise statt sechzehn nur acht Streifen pro Typ hergestellt werden. Nach dem Stand der Technik müssten unterschiedliche Materialstreifen nacheinander gefertigt werden. Dies beeinträchtigt die Kapazität der Anlage, weil ein Umrüsten mit einem länger dauernden Stillstand einhergeht.

Die Erfindung gestattet eine besonders variable Herstellung unterschiedlicher Materialstreifen bzw. Materialstreifentypen, sowohl gleichzeitig als auch in der gleichen Anlage.

Die Anlage weist bevorzugt ein Spulengatter mit Spulen auf, auf welchen jeweils Festigkeitsträger eines ersten Typs aufgewickelt sind, und mit Spulen, auf welchen jeweils Festigkeitsträger eines anderen Typs aufgewickelt sind. Die Anzahl der unterschiedlichen Festigkeitsträgertypen kann zwei oder mehr betragen.

Vorzugsweise unterscheiden sich die auf den Spulen des Spulengatters aufgewickelten Festigkeitsträgertypen hinsichtlich ihres Materials und/oder ihrer Konstruktion voneinander.

Jede Kühlstrecke kann ferner vorzugsweise die gleiche Anzahl von frei drehbar gelagerten Kühlrollen besitzen, wobei insbesondere vorgesehen ist, dass zumindest die frei drehbar gelagerten Rollen der beiden Kühlstrecken parallel zueinander verlaufend angeordnet sind.

Weitere Merkmale, Vorteile und Einzelheiten der Erfindung werden nun anhand der schematischen Zeichnung, die ein Ausführungsbeispiel darstellt, näher beschrieben. Dabei zeigt die einzige Figur,

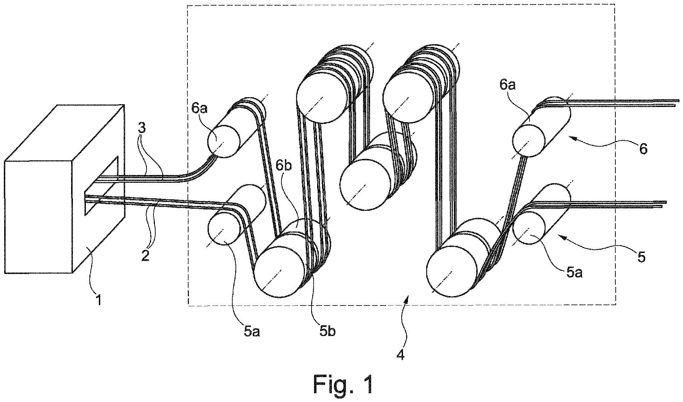

Fig. 1, ein Ausführungsbeispiel einer Vorrichtung, wobei Fig. 1 den Ablauf des erfindungsgemäßen Verfahrens veranschaulicht.

Fig. 1 zeigt Anlagenteile einer Anlage zur Herstellung bandartiger Materialstreifen, insbesondere einer sogenannten Cap Strip Line zur Herstellung von Materialstreifen für Gürtelbandagelagen von Fahrzeugluftreifen.

Fig. 1 zeigt schematisch einen Spritzkopf 1, in welchem das Zusammenfügen einer Kautschukmischung mit textilen Festigkeitsträgern zu mit Festigkeitsträgern verstärkten, gummierten Materialstreifen 2 und 3 erfolgt. Im gezeigten Beispiel werden aus der gleichen, in einem nicht dargestellten Extruder plastifizierten Kautschukmischung im Spritzkopf 1 zwei Materialstreifen 2 eines ersten Typs und zwei Materialstreifen 3 eines zweitens Typs erstellt. Die Materialstreifen 2 und 3 sind insbesondere zur Herstellung von Spulbandagen bzw. Cap Plies auf Gürtelverbänden von Fahrzeugluftreifen vorgesehen und werden daher beim Aufbau der betreffenden Rohreifen auf die Gürtelverbände in bekannter Weise spiralförmig umlaufend gewickelt. Die beiden Materialstreifen 2 des ersten Typs und die beiden Materialstreifen 3 des zweiten Typs stimmen jeweils untereinander überein und können sich hinsichtlich der Dicke der Gummierungsschicht und/oder hinsichtlich des enthaltenen Festigkeitsträgertyps voneinander unterscheiden. Vorzugsweise enthalten die Materialstreifen 2 des ersten Typs textile Festigkeitsträger, die sich von den textilen Festigkeitsträgern in den Materialstreifen 3 des zweiten Typs bezüglich des Materials und /oder der Konstruktion, letzteres beispielsweise durch eine unterschiedliche Anzahl von Garnen, unterscheiden. Die textilen Festigkeitsträger in den Materialstreifen 2 und 3 verlaufen jeweils parallel zueinander und parallel zur Streifenlängsrichtung unter geringen gegenseitigen Abständen. Die Materialstreifen 2, 3 weisen beispielsweise eine Breite von 8,0 mm bis 15,0 mm auf und enthalten jeweils sieben bis vierzehn textile Festigkeitsträger. In den beiden Materialstreifen 2 des ersten Typs können beispielsweise Nylonkorde als Festigkeitsträger enthalten sein, in den Materialstreifen 3 des zweiten Typs beispielsweise Hybridkorde, die aus einer Kombination von Aramid-Garnen mit Nylon-Garnen bestehen.

Weitere, nicht dargestellte Anlagenbestandteile sind ein Spulengatter mit einer Vielzahl von Spulen mit den aufgewickelten textilen Festigkeitsträgern sowie der ebenfalls nicht gezeigte Extruder zum Plastifizieren der Kautschukmischung mit seinen nachgeordneten Einrichtungen, beispielsweise einer Zahnradpumpe zum Sicherstellen einer konstanten Ausstoßleistung an Kautschukmischung unter entsprechendem Druckaufbau. Der Spritzkopf 1 weist einen entsprechenden modularen Aufbau auf, um die unterschiedlichen textilen Festigkeitsträger in entsprechender Anzahl vorzuordnen und anschließend gleichzeitig zu gummieren.

Die aus dem Spritzkopf 1 austretenden Materialstreifen 2 und 3 werden unter Spannung über eine Kühlvorrichtung 4 geführt und nachfolgend in einer nicht gezeigten Aufwickelstation einzeln aufgewickelt und der weiteren Verwendung im Aufbau von Rohreifen zugeführt. Die Kühlvorrichtung 4 umfasst für jeden Typ von Materialstreifen 2, 3 eine separate Kühlstrecke 5, 6, wobei die Kühlstrecken 5, 6 vorzugsweise zueinander parallel bzw. nebeneinander verlaufend angeordnet sind. Im Beispiel werden daher die beiden Materialstreifen 2 des ersten Typs über die Kühlstrecke 5, die beiden Materialstreifen 3 des zweiten Typs über die Kühlstrecke 6 geführt. Zu Beginn und am Ende jeder Kühlstrecke 5, 6 befindet sich jeweils eine angetriebene, gekühlte oder nicht gekühlte Rolle 5a, 6a. Zwischen den angetriebenen Rollen 5a, 6a, umfasst jede Kühlstrecke 5, 6 eine Anzahl von nicht angetriebenen, frei drehbar gelagerten Kühlrollen 5b, 6b wobei jede Kühlrolle 5b, 6b einzeln gekühlt wird, beispielsweise von Kühlwasser durchströmt wird. Die Materialstreifen 2, 3 werden vorerst entlang der Oberseiten der angetriebenen Rollen 5a, 6a geführt, an den dazwischen positionierten nicht angetriebenen, frei drehbaren Kühlrollen 5b, 6b abwechselnd entlang der Unterseiten und der Oberseiten dieser Rollen 5b, 6b. Im gezeigten Beispiel sind jeweils fünf Kühlrollen 5b und fünf Kühlrollen 6b dargestellt, die Anzahl der Kühlrollen ist jedoch üblicherweise wesentlich höher, beispielsweise sind bis zu sechzehn Rollen 5b und 6b vorgesehen. Die Rotationsgeschwindigkeit der angetriebenen Rollen 5a, 6a ist variabel einstellbar, um die jeweiligen Materialstreifen 2, 3 unter einer entsprechenden Spannung über die Kühlstrecken 5, 6 zu transportieren. Insbesondere erfordert ein unterschiedliches Festigkeitsträgermaterial in den Materialstreifen 2 und 3 eine unterschiedliche Spannung für einen optimalen Transport der Materialstreifen 2, 3 über die Kühlstrecken 5, 6.

Im Spritzkopf 1 werden die entsprechend vorgeordneten und parallel zueinander verlaufenden Festigkeitsträgergruppen zum Bilden der Materialstreifen 2, 3 in die Kautschukmischung eingebettet. Dabei kann die Einbettung derart erfolgen, dass sich die Dicke bzw. die Gummierungsdicke der Materialstreifen 2 von jener der Materialstreifen 3 unterscheidet. Eine unterschiedliche Dicke kann insbesondere dann zweckmäßig sein, wenn die in den Materialstreifen enthaltenen unterschiedlichen Typen von Festigkeitsträgern voneinander auch unterschiedliche Durchmesser aufweisen. Auch diese Maßnahme erfordert eine Anpassung und Einstellung der Spannung beim Durchlaufen der Kühlstrecken 5, 6.

Bei den aus dem Stand der Technik bekannten Anlagen, den bekannten Cap Strip Lines oder Cap Strip Systems, wird eine wesentlich größere Anzahl an bandartigen Materialstreifen als vier wie im gezeigten Beispiel hergestellt. Auch bei der Erfindung kann vorgesehen sein, im Spritzkopf 1 eine größere Anzahl von bandartigen Materialstreifen herzustellen, beispielsweise bis zu sechzehn Streifen. Darüber hinaus ist es möglich, die Anlage derart auszuführen, dass mehr als zwei Materialstreifen unterschiedlichen Typs, beispielsweise bis zu fünf oder sechs Materialstreifen unterschiedlichen Typs, im Spritzkopf 1 hergestellt werden.

### Bezugszeichenliste

- 1: Spritzkopf
- 2, 3: Materialstreifen
- 4, 5, 6: Kühlvorrichtung
- 5a, 6a: angetriebene Rolle
- 5b, 6b: nicht angetriebene Kühlrolle

## Patentansprüche

1. Anlage zur Herstellung einer Anzahl von bandartigen Materialstreifen (2, 3) aus in eine Kautschukmischung eingebetteten parallel zueinander und in Längsrichtung der Materialstreifen (2, 3) verlaufenden textilen Festigkeitsträgern,
mit
- einem Spulengatter mit einer Vielzahl von Spulen mit aufgewickelten textilen Festigkeitsträgern,
- einem Extruder zum Plastifizieren einer Kautschukmischung,
- einem Spritzkopf (1) zum gruppenweisen Vorordnen und Einbetten der Festigkeitsträger in die Kautschukmischung, wobei der Spritzkopf (1) einen modularen Aufbau zur Herstellung von zumindest zwei unterschiedlichen Typen von in jedem Typ untereinander gleichen Materialstreifen (2, 3) aufweist,
- einer dem Spritzkopf (1) nachgeordneten Kühlvorrichtung (4) mit je einer Kühlstrecke (5, 6) für die jeweils untereinander gleichen Materialstreifen (2, 3), wobei jede Kühlstrecke (5, 6) angetriebene Rollen (5a, 6a) und frei drehbar gelagerten Kühlrollen (5b, 6b) umfasst und
- einer Aufwickelstation zum Aufwickeln der gekühlten Materialstreifen (2, 3),
**dadurch gekennzeichnet,**
**dass** jede Kühlstrecke (5, 6) je eine gekühlte oder ungekühlte angetriebene Rolle (5a, 6a) als erste und als letzte Rolle aufweist, wobei die Rotationsgeschwindigkeit der angetriebenen Rollen (5a, 6a) variabel einstellbar ist.

2. Anlage nach Anspruch 1, **gekennzeichnet durch** ein Spulengatter mit Spulen, auf welchen jeweils Festigkeitsträger eines ersten Typs aufgewickelt sind und mit Spulen, auf welchen jeweils Festigkeitsträger eines anderen Typs aufgewickelt sind.

3. Anlage nach Anspruch 2, **dadurch gekennzeichnet, dass** sich die auf den Spulen des Spulengatters aufgewickelten Festigkeitsträgertypen hinsichtlich ihres Materials und/oder ihrer Konstruktion voneinander unterscheiden.

4. Anlage nach einem der Ansprüche 1 bis 3, **dadurch gekennzeichnet, dass** jede Kühlstrecke (5, 6) die gleiche Anzahl von frei drehbar gelagerten Kühlrollen (5b, 6b) aufweist.

5. Anlage nach einem der Ansprüche 1 bis 4, **dadurch gekennzeichnet, dass** zumindest die frei drehbar gelagerten Kühlrollen (5b, 6b) der beiden Kühlstrecken (5, 6) parallel zueinander verlaufend angeordnet sind.

## Claims

1. Installation for producing a number of band-like material strips (2, 3) from textile strengthening members which are embedded into a rubber mixture and which run parallel to one another and in a longitudinal direction of the material strips (2, 3), having
- a creel with a multiplicity of bobbins with wound-up textile strengthening members,
- an extruder for plasticizing a rubber mixture,
- a moulding head (1) for groupwise pre-arrangement and embedment of the strengthening members into the rubber mixture, wherein the moulding head (1) has a modular construction for producing at least two different types of material strips (2, 3), the material strips of each type being identical,
- a cooling apparatus (4) arranged after the moulding head (1) and having in each case one cooling section (5, 6) for the respectively identical material strips (2, 3), wherein each cooling section (5, 6) comprises driven rolls (5a, 6a), and comprises cooling rolls (5b, 6b) mounted so as to be freely rotatable, and
- a winding station for winding up the cooled material strips (2, 3),
**characterized**
**in that** each cooling section (5, 6) has in each case one cooled or uncooled driven roll (5a, 6a) as first roll and as last roll, wherein the rotational speed of the driven rolls (5a, 6a) is settable in a variable manner.

2. Installation according to Claim 1, **characterized by** a creel with bobbins on which are wound up in each case strengthening members of a first type and with bobbins on which are wound up in each case strengthening members of another type.

3. Installation according to Claim 2, **characterized in that** the types of strengthening members wound up on the bobbins of the creel differ from one another with regard to their material and/or with regard to their construction.

4. Installation according to one of Claims 1 to 3, **characterized in that** each cooling section (5, 6) has the same number of cooling rolls (5b, 6b) mounted so as to be freely rotatable.

5. Installation according to one of Claims 1 to 4, **characterized in that** at least the cooling rolls (5b, 6b) of the two cooling sections (5, 6) that are mounted so as to be freely rotatable are arranged so as to run parallel to one another.

## Revendications

1. Installation pour la fabrication d'un nombre de bandes de matériau (2, 3) de type ruban à partir de supports de résistance textiles incorporés dans un mélange de caoutchouc, s'étendant parallèlement les uns aux autres et dans la direction longitudinale des bandes de matériau (2, 3),
avec
- un râtelier de bobines avec une pluralité de bobines sur lesquelles sont enroulés des supports de résistance textiles,
- une extrudeuse pour plastifier un mélange de caoutchouc,
- une tête d'injection (1) pour la prédisposition par groupes et l'incorporation des supports de résistance dans le mélange de caoutchouc, la tête d'injection (1) présentant une structure modulaire pour la fabrication d'au moins deux types différents de bandes de matériau (2, 3) identiques entre elles dans chaque type,
- un dispositif de refroidissement (4) disposé en aval de la tête d'injection (1), avec respectivement une section de refroidissement (5, 6) pour les bandes de matériau (2, 3) respectivement identiques entre elles, chaque section de refroidissement (5, 6) comprenant des rouleaux entraînés (5a, 6a) et des rouleaux de refroidissement (5b, 6b) montés à rotation libre, et
- un poste d'enroulement pour enrouler les bandes de matériau refroidies (2, 3),
**caractérisée en ce que**
chaque section de refroidissement (5, 6) présente respectivement un rouleau entraîné (5a, 6a) refroidi ou non refroidi en tant que premier et en tant que dernier rouleau, la vitesse de rotation des rouleaux entraînés (5a, 6a) étant réglable de manière variable.

2. Installation selon la revendication 1, **caractérisée par** un râtelier de bobines avec des bobines sur lesquelles sont respectivement enroulés des supports de résistance d'un premier type et avec des bobines sur lesquelles sont respectivement enroulés des supports de résistance d'un autre type.

3. Installation selon la revendication 2, **caractérisée en ce que** les types de supports de résistance enroulés sur les bobines du râtelier de bobines se distinguent les uns des autres en ce qui concerne leur matériau et/ou leur construction.

4. Installation selon l'une quelconque des revendications 1 à 3, **caractérisée en ce que** chaque section de refroidissement (5, 6) présente le même nombre de rouleaux de refroidissement (5b, 6b) montés à rotation libre.

5. Installation selon l'une quelconque des revendications 1 à 4, **caractérisée en ce qu'**au moins les rouleaux de refroidissement (5b, 6b) des deux sections de refroidissement (5, 6), qui sont montés à rotation libre, sont disposés parallèlement les uns aux autres.
